# EUROPEAN PATENT APPLICATION

(11) **EP 4 439 957 A1**
(43) Date of publication of application: **02.10.2024**
(21) Application number: 23168579.3
(22) Date of filing: 18.04.2023
(51) Int. Cl.: H02M 3/158, H02M 1/00, H02J 3/38, H02J 3/46, H02M 1/32

(54) **APPARATUS AND SYSTEM FOR POWER CONVERSION AND METHOD FOR OPERATING THE APPARATUS**

(30) Priority: 31.03.2023 CN 202310348527
(71) Applicant: Hitachi Energy Ltd, 8050 Zürich (CH)
(72) Inventor: HUANG, Xing, Beijing, 100024 (CN); YANG, XiaoBo, Beijing, 100015 (CN); TUCKEY, Andrew Mark, Livingstone, 0837 (AU)
(74) Representative: Vossius & Partner Patentanwälte Rechtsanwälte mbB

(57) **Abstract**

An apparatus and a system for power conversion and a method for operating the apparatus are provided. The apparatus comprises: at least one first partial power converter (PPC) string connected in parallel with a DC bus, wherein each first PPC string comprises more than one PPCs connected in series, wherein, in each first PPC string, an output of each PPC of the more than one PPCs is connected in series, and an input of each PPC of the more than one PPCs is connected to a corresponding power source, wherein, in each PPC, the input of the PPC and the output of the PPC have one common terminal.

## Description

### TECHNICAL FIELD

The present disclosure relates to the field of power conversion, and more specifically, to an apparatus and a system for power conversion, and a method for operating an apparatus for power conversion.

### BACKGROUND

Energy Storage System (ESS) is a system that contains, for example, batteries (such as, lithium batteries, lead batteries) as energy storage carriers to store electrical energy and supply electrical energy for a certain period of time. The ESS is widely used in power grids to adjust the peak and frequency of the power grids, thereby ensuring the safe operation of the power grids.

The conventional ESS typically includes multiple battery strings connected in parallel, which are further connected to the grid-connected AC/DC converter. This leads to at least the following problems:
1) Due to the manufacturing tolerance of battery cells, there will be unbalanced current between the paralleled connected strings of battery cells. Furthermore, considering the aging of battery cell, this unbalanced current problem will deteriorate with the time goes by. This issue will result in different aging speeds among the battery strings and finally some of the battery strings will reach the end of life earlier than designed; and
2) To build higher DC voltage for large-scale PCS system, larger number of battery cells are connected in series in one string. Due to the manufacturing tolerance of battery cells, even with the same discharging current, only some of the battery cells in one string can be fully charged or discharged. In other words, the state of charge (SOC) of each battery cells are different. More battery cells in series, larger SOC deviation. This is a waste of battery cell capacity. Although the BMS has certain battery cell balancing capability, it is quite limited.

### SUMMARY

The present disclosure provides an apparatus and a system for power conversion and a method for operating the apparatus.

According to an aspect of the present disclosure, an apparatus for power conversion is disclosed. The apparatus includes at least one first of partial power converter (PPC) string connected in parallel with a DC bus, wherein each first PPC string comprises more than one PPCs connected in series, wherein, in each first PPC string, an output of each PPC of the more than one PPCs is connected in series, and an input of each PPC of the more than one PPCs is connected to a corresponding power source, wherein, in each PPC, the input of the PPC and the output of the PPC have one common terminal.

According to some embodiments, the more than one PPCs include at least a first PPC and a second PPC, wherein a first PPC terminal of the first PPC is connected to a first bus terminal of the DC bus, a second PPC terminal of the first PPC is connected to a first source terminal of a first power source, and a third PPC terminal of the first PPC is connected to a second source terminal of the first power source and a first PPC terminal of an adjacent PPC closer to a second bus terminal of the DC bus than the first PPC, and a first PPC terminal of the second PPC is connected to a third PPC terminal of an adjacent PPC closer to the first bus terminal than second the PPC, a second PPC terminal of the second PPC is connected to a first source terminal of a second power source, and a third PPC terminal of the second PPC is connected to a second source terminal of the second power source and the second bus terminal, and wherein, in each PPC of the more than one PPCs, the input of the PPC is formed between the second PPC terminal of the PPC and the third PPC terminal of the PPC, and the output of the PPC is formed between the first PPC terminal of the PPC and the third PPC terminal of the PPC.

According to some embodiments, the more than one PPCs further includes a third PPC between the first PPC and the second PPC, wherein a first PPC terminal of the third PPC is connected to the third terminal of the first PPC, a second PPC terminal of the third PPC is connected to a first source terminal of a third power source, and a third PPC terminal of the third PPC is connected to a second source terminal of the third power source and the first PPC terminal of the second PPC.

According to some embodiments, the at least one first PPC string is further connected to a grid-connected AC/DC converter, wherein an input of the grid-connected AC/DC converter is connected to the DC bus, and an output of the grid-connected AC/DC converter is connected to the gird.

According to some embodiments, the apparatus for power conversion further comprises a second PPC string of one PPC connected in parallel with the DC bus.

According to some embodiments, at least one of the power sources connected to the PPCs in the apparatus is a battery.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms one of the input and the output of the PPC, and a DC port of the first AC/DC converter and the DC port of the second AC/DC converter are connected in series to form the other of the input and output of the PPC.

According to another aspect of the present disclosure, a method of operating the above apparatus of power conversion is provided. The method includes: determining a state of the apparatus, wherein the state of the apparatus comprises a power source mode and a voltage source mode; for each first PPC string of the at least one first PPC strings, obtaining a respective control signal for the first PPC string according to the state of the apparatus; for each PPC of the first PPC string, obtaining a respective control signal for the PPC according to the state of the apparatus; and for each PPC of the first PPC string, controlling the PPC based on the respective control signal for the PPC according to the state of the apparatus.

According to some embodiments, the obtaining a respective control signal for the first PPC string according to the state of the apparatus comprises: in response to the state of the apparatus being the power source mode, generating the respective control signal for the first PPC string based on a power reference for the apparatus, an output power of the apparatus and a respective status parameter of each of the at least one first PPC string, wherein the control signal for the first PPC string includes a current reference for the first PPC string, and wherein the obtaining a respective control signal for the PPC according to the state of the apparatus comprises: in response to the state of the apparatus being the power source mode, generating the respective control signal for the PPC based on the respective current reference for the first PPC string, the current of the first PPC string and a respective status parameter of each of PPCs in the first PPC string, wherein the control signal for the PPC includes at least one of the input voltage reference, the input current reference and the input power reference for the PPC and wherein the controlling the PPC based on the respective control signal for the PPC according to the state of the apparatus comprises: in response to the state of the apparatus being the power source mode, controlling the PPC at least partly based on the respective control signal for the PPC and the feedback parameter corresponding to the respective control signal for the PPC.

According to some embodiments, the controlling the PPC at least partly based on the respective control signal for the PPC and the feedback parameter corresponding to the respective control signal for the PPC comprises: controlling the PPC based on the respective control signal for the PPC, the feedback parameter corresponding to the respective control signal for the PPC and at least one of the following: the change of the status parameter of the PPC; and the difference between the input voltage and the output voltage of the PPC.

According to some embodiments, the at least one first PPC string is further connected to a grid-connected AC/DC converter, wherein the input of the grid-connected AC/DC converter is connected to the DC bus, and the output of the grid-connected AC/DC converter is connected to the gird, and wherein the grid-connected AC/DC converter controls the voltage of the DC bus based on a DC bus voltage and at least one of the following: power efficiency of the PPCs in the apparatus; power efficiency of the grid-connected AC/DC converter; temperature of the battery; and temperature of the cabinets of the PPCs in the apparatus.

According to some embodiments, the obtaining a respective control signal for the first PPC string according to the state of the apparatus comprises: in response to the state of the apparatus being the voltage source mode, generating the respective control signal for the first PPC string based on a voltage reference for the apparatus, an output voltage of the apparatus and a respective status parameter of each of the at least one first PPC string, wherein the control signal for the first PPC string includes at least one droop characteristic parameter for the first PPC string, and wherein the obtaining a respective control signal for the PPC according to the state of the apparatus comprises: in response to the state of the apparatus being the voltage source mode, determining a voltage reference for the first PPC string based on the at least one droop characteristic parameter for the first PPC string and a current of the string; and generating respective output voltage references for PPCs of the first PPC string based on the voltage reference for the first PPC string and a respective status parameter of each of PPCs in the first PPC string, and wherein the controlling the PPC based on the respective control signal for the PPC according to the state of the apparatus comprises: in response to the state of the apparatus being the voltage source mode, controlling the PPC at least partly based on the output voltage reference for the PPC, the output voltage of the PPC and the status parameter of the PPC.

According to some embodiments, the controlling the PPC at least partly based on the output voltage reference for the PPC, the output voltage of the PPC and the status parameter of the PPC comprises: controlling the PPC at least based on the output voltage reference for the PPC, the output voltage of the PPC and the difference between the input voltage and the output voltage of the PPC.

According to some embodiments, the at least one first PPC string is further connected to a grid-connected AC/DC converter, wherein the input of the grid-connected AC/DC converter is connected to the DC bus, and the output of the grid-connected AC/DC converter is connected to the gird, and the method further comprises: in response to the state of the apparatus being the voltage source mode, generating the voltage reference for the apparatus based on a DC bus voltage and at least one of the following parameters: power efficiency of the PPCs in the apparatus; power efficiency of the grid-connected AC/DC converter; temperature of the battery; and temperature of the cabinets of the PPCs in the apparatus.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms one of the input and the output of the PPC, and the DC port of the first AC/DC converter and a DC port of the second AC/DC converter are connected in series to form the other of the input and the output of the PPC, and the controlling the PPC based on the respective control signal for the PPC according to the state of the apparatus comprises: in response to that the DC port of the second AC/DC converter forms the input of the PPC, and the DC port of the first AC/DC converter and the DC port of the second AC/DC converter are connected in series to form the output of the PPC, controlling the first AC/DC converter of the PPC based on the respective control signal for the PPC, and setting the second AC/DC converter in an uncontrolled mode when the PPC is in the charging mode, and controlling the second AC/DC converter of the PPC based on the respective control signal for the PPC, and setting the first AC/DC converter in the uncontrolled mode when the PPC is in the discharging mode; and in response to that the DC port of the second AC/DC converter forms the output of the PPC, and the DC port of the first AC/DC converter and the DC port of the second AC/DC converter are connected in series to form the input of the PPC, controlling the first AC/DC converter of the PPC based on the respective control signal for the PPC, and setting the second AC/DC converter in an uncontrolled mode when the PPC is in the discharging mode, and controlling the second AC/DC converter of the PPC based on the respective control signal for the PPC, and setting the first AC/DC converter in the uncontrolled mode when the PPC is in the charging mode, wherein, in the uncontrolled mode, all controllable switches in the first AC/DC converter or the second AC/DC converter are held open or held closed.

According to yet another aspect of the present disclosure, a system for power conversion is provided. The system includes: the above apparatus; a DC bus; and a plurality of power sources connected to the apparatus.

It should be understood that the content described in this section is not intended to identify critical or important features of the embodiments of the present disclosure, and is not used to limit the scope of the present disclosure either. Other features of the present disclosure will be easily understood through the following specification.

### BRIEF DESCRIPTION OF THE DRAWINGS

The drawings exemplarily show embodiments and form a part of the specification, and are used to illustrate example implementations of the embodiments together with a written description of the specification. The embodiments shown are merely for illustrative purposes and do not limit the scope of the claims. Throughout the drawings, like reference signs denote like but not necessarily identical elements.
Fig. 1 is a schematic diagram illustrating an apparatus of power conversion according to an embodiment of the present disclosure.
Figs. 2A-2B are schematic diagrams illustrating the connection of the string of PPCs in the apparatus of power conversion in Fig. 1 according to an embodiment of the present disclosure.
Fig. 3 is a schematic diagram illustrating an apparatus of power conversion according to an embodiment of the present disclosure.
Figs. 4A-4B are schematic diagrams illustrating the connection configuration of the PPC in Fig. 1 according to an embodiment of the present disclosure.
Fig. 5 is a flowchart illustrating a method for operating the apparatus of power conversion according to an embodiment of the present disclosure.
Fig. 6 is a schematic diagram illustrating a controlling loop of the apparatus of power conversion according to an embodiment of the present disclosure.
Fig. 7 is a flowchart illustrating a method for operating the apparatus of power conversion in Fig. 1 according to an embodiment of the present disclosure.
Fig. 8A is a schematic diagram illustrating a controlling loop of the apparatus level controller in Fig. 6 according to an embodiment of the present disclosure.
Fig. 8B is a schematic diagram illustrating a controlling loop of the string level controller in Fig. 6 according to an embodiment of the present disclosure.
Fig. 8C is a schematic diagram illustrating a controlling loop of the PPC level controller in Fig. 6 according to an embodiment of the present disclosure.
Fig. 9 is a flowchart illustrating a method for operating the apparatus of power conversion in Fig. 1 according to an embodiment of the present disclosure.
Fig. 10A is a schematic diagram illustrating a controlling loop of the apparatus level controller in Fig. 6 according to an embodiment of the present disclosure.
Fig. 10B is a schematic diagram illustrating a controlling loop of the string level controller in Fig. 6 according to an embodiment of the present disclosure.
Fig. 10C is a schematic diagram illustrating a controlling loop of the PPC level controller in Fig. 6 according to an embodiment of the present disclosure.

### DETAILED DESCRIPTION OF THE EMBODIMENTS

The present disclosure will be further described in detail below with reference to the drawings and embodiments. It can be understood that embodiments described herein are used merely to explain a related disclosure, rather than limit the disclosure. It should be additionally noted that, for ease of description, only parts related to the related disclosure are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules. As used herein, the term "and/or" includes any and all combinations of one or more of the associated listed items. The term "based on" is to be construed as "based at least in part on".

According to embodiments of the present disclosure, an apparatus and a system for power conversion and a method for operating the apparatus are provided.

According to some embodiments, an apparatus for power conversion is provided, which includes at least one first PPC string of partial power converters (PPCs) connected in parallel with a DC bus, wherein each first PPC string comprises more than one PPCs connected in series, wherein, in each first PPC string, an output of each PPC of the more than one PPCs is connected in series, and an input of each PPC of the more than one PPCs is connected to a corresponding power source, wherein, in each PPC, the input of the PPC and the output of the PPC have one common terminal.

According to the embodiments of the present disclosure, the apparatus of power conversion can provide at least the following advantages:
1) The unbalanced current between the parallel connected strings of power sources (such as the battery cells) can be limited, thereby the lifetime of the power sources can be extended;
2) More accurate control for each power source can be provided, thereby making full use of the energy of each power source, even if the multiple power sources in one string are in different status (for example, in different SOC status)
3) More than one PPCs can be connected in series to build DC bus with higher voltage level, which makes the connection to the MV system easier (for example, through a grid-connected AC/DC converter);
4) With the PPC, the power efficiency can be improved and the capital cost can be reduced, thereby providing a low cost solution;
5) Power sources can be decoupled with each other, so that power sources with different characteristics (for example, power sources from different suppliers) can be used together, and new power sources can be added to augment the capacity or prolong the lifetime of the apparatus;
6) PPCs based on power electronics can sense the power source fault and eliminate the fault influence, so that the fault influence can be limited, thereby providing fast fault diagnosis, location and clearance; and
7) The modular designed PPCs are easy to be replaced and have a limited maintenance cost, thereby reducing the maintenance cost of the whole apparatus.

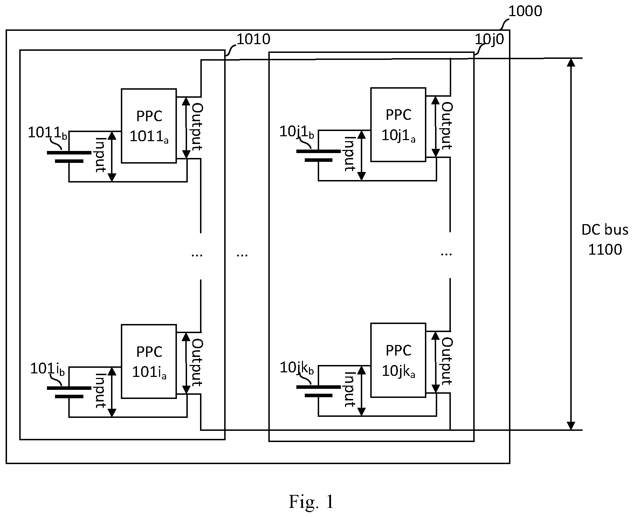

Fig. 1 is a schematic diagram illustrating an apparatus of power conversion 1000 according to an embodiment of the present disclosure.

As shown in Fig. 1, the apparatus of power conversion 1000 includes at least one first PPC string 1010, ..., 10j0 connected in parallel with a DC bus 1100, and each first PPC string includes more than one PPCs connected in series. For example, the string 1010 includes PPCs 1011ₐ,..., 101iₐ, and the string 10j1 includes PPCs 10j1ₐ, ..., 10jkₐ.

In each first PPC string of the apparatus 1000, an output of each PPC of the more than one PPCs is connected in series. For example, in Fig. 1 the outputs of the PPCs 1011ₐ, ..., 101ia in the string 1010 are connected in series, and the outputs of the PPCs 10j1ₐ, ..., 10jkₐ. are connected in series. Also, in each first PPC string, an input of each PPC of the more than one PPCs is connected to a corresponding power source. For example, the input of the PPC 1011ₐ is connected to the corresponding power source 1011_{b}, and the input of the PPC 10j1ₐ is connected to the corresponding power source 10j1_{b}. In addition, as shown in Fig. 1, the input of the PPC and the output of the PPC have one common terminal.

Herein, the partial power converter in present disclosure refers to a converter having partial power processing characteristic, i.e., a fraction of the power goes directly from the source to the load bypassing the converter and the remaining power is processed by the converter, so that the overall efficiency can be improved and the capital cost can be decreased compared with the full power converter.

According to some embodiments, the number of PPCs in different strings may be the same, or may be different. For example, in Fig. 1. the number of PPCs, i, for string 1010 and the number of PPCs, k, for string 10j0 may be the same, or may be different.

According to some embodiments, "an output of each PPC of the more than one PPCs is connected in series" means that, for each PPC, one output terminal of the PPC is connected to an output terminal of an adjacent PPC closer to a first terminal of the DC bus, and the other output terminal of the PPC is connected to an output terminal of another adjacent PPC closer to a second terminal of the DC bus.

According to some embodiments, the more than one PPCs include at least a first PPC and a second PPC. A first PPC terminal of the first PPC is connected to a first bus terminal of the DC bus, a second PPC terminal of the first PPC is connected to a first source terminal of a first power source, and a third PPC terminal of the first PPC is connected to a second source terminal of the first power source and a first PPC terminal of an adjacent PPC closer to the second bus terminal than the first PPC. A first PPC terminal of the second PPC is connected to a third PPC terminal of an adjacent PPC closer to the first bus terminal than the second PPC, a second PPC terminal of the second PPC is connected to a first source terminal of a second power source, and a third PPC terminal of the second PPC is connected to a second source terminal of the second power source and a second bus terminal of the DC bus. According to the embodiments of the present disclosure, the output of the more than one PPCs in the first PPC string are connected one after another in series to form a relative high DC bus voltage, which may make the connection to the MV system easier, and the input of each PPC in the first PPC string is connected to a corresponding power source (e.g., a battery module) to decouple the power sources from each other and provide more accurate control for each power source.

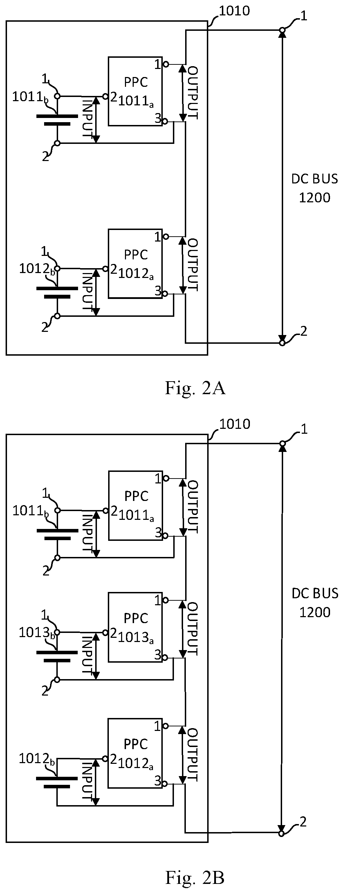

One embodiment of the string 1010 in the apparatus 1000 in Fig. 1 are described below with reference to Figs. 2A and 2B.

According to some embodiments, as shown in Figs. 2A and 2B, in each PPC of the more than one PPCs, the input of the PPC is formed between the second PPC terminal of the PPC and the third PPC terminal of the PPC, and the output of the PPC is formed between the first PPC terminal of the PPC and the third PPC terminal of the PPC.

According to some embodiments, as shown in Fig. 2A, the string 1010 includes a first PPC 1011ₐ and a second PPC 1012ₐ, wherein a first PPC terminal of the first PPC 1011ₐ is connected to a first bus terminal of the DC bus 1100, a second PPC terminal of the first PPC 1011ₐ is connected to a first source terminal of a first power source 1011b, and a third PPC terminal of the first PPC 1011ₐ is connected to a second source terminal of the first power source 1011_{b} and a first PPC terminal of a second PPC 1012ₐ (i.e., the adjacent PPC closer to the second bus terminal than the first PPC 1011ₐ). A first PPC terminal of the second PPC 1012ₐ is connected to a third PPC terminal of a first PPC 1011ₐ (i.e., the adjacent PPC closer to the first bus terminal than the second PPC 1012ₐ), a second PPC terminal of the second PPC 1012ₐ is connected to a first source terminal of a second power source 1012_{b}, and a third PPC terminal of the second PPC is connected to a second source terminal of the second power source 1012_{b} and a second bus terminal of the DC bus 1100.

According to some embodiments, as shown in Fig. 2B, in addition to the first PPC 1011ₐ and the second PPC 1012ₐ, the string 1010 further includes a third PPC 1013ₐ between the first PPC 1011ₐ and the second PPC 1012ₐ. In this configuration, for the first PPC 1011ₐ, a first PPC terminal of the first PPC 1011ₐ is connected to a first bus terminal of the DC bus 1100, a second PPC terminal of the first PPC 1011ₐ is connected to a first source terminal of a first power source 1011b, and a third PPC terminal of the first PPC 1011ₐ is connected to a second source terminal of the first power source 1011_{b} and a first PPC terminal of a third PPC 1013ₐ (i.e., the adjacent PPC closer to the second bus terminal than the first PPC 1011ₐ). For the second PPC 1012ₐ, a first PPC terminal of the second PPC 1012ₐ is connected to a third PPC terminal of the third PPC 1013ₐ (i.e., the adjacent PPC closer to the first bus terminal than the second PPC 1012ₐ), a second PPC terminal of the second PPC 1012ₐ is connected to a first source terminal of a second power source 1012_{b}, and a third PPC terminal of the second PPC is connected to a second source terminal of the second power source 1012_{b} and a second bus terminal of the DC bus 1100. For the third PPC 1013ₐ, a first PPC terminal of the third PPC is connected to the third terminal of the first PPC 1011ₐ (i.e., the adjacent PPC closer to the first bus terminal than the third PPC 1012ₐ), a second PPC terminal of the third PPC 1013ₐ is connected to a first source terminal of a third power source 1013_{b}, and a third PPC terminal of the third PPC 1013ₐ is connected to a second source terminal of the third power source 1013_{b} and the first PPC terminal of the second PPC 1012_{b} (i.e., the adjacent PPC closer to the second bus terminal than the third PPC 1012ₐ).

It should be understood that the first PPC string of the apparatus may include more PPCs than the PPCs of the first PPC string shown in Figs. 2A and 2B, for example, four PPCs, five PPCs, etc.

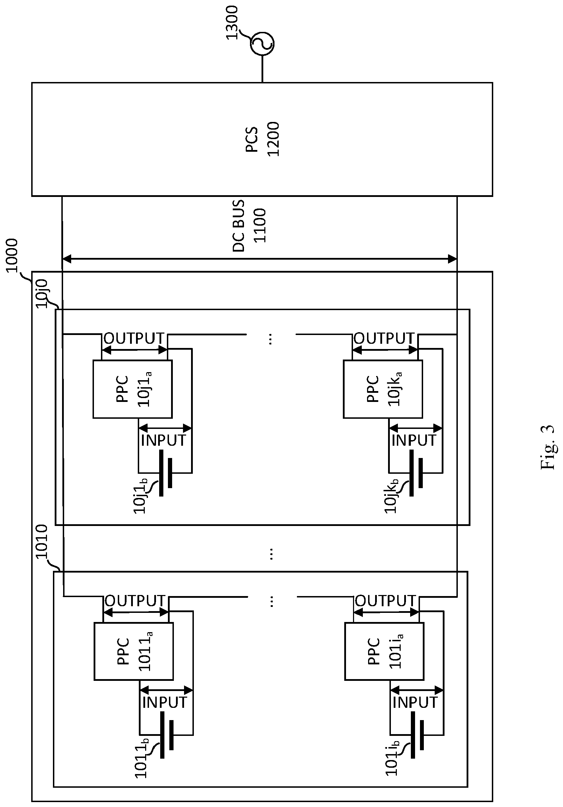

Fig. 3 is a schematic diagram illustrating an apparatus of power conversion according to an embodiment of the present disclosure. The apparatus of power conversion 1000 and the DC bus 1100 in Fig. 3 are similar to the apparatus of power conversion 1000 and the DC bus 1100 in Fig. 1, and the corresponding description are omitted for the purpose of conciseness.

As shown in Fig. 3, the at least one first PPC string 1010, ..., 10j0 are further connected to a grid-connected AC/DC converter 1200. In this configuration, an input of the grid-connected AC/DC converter 1200 is connected to the DC bus 1100, and the output of the grid-connected AC/DC converter 1200 is connected to the grid 1300. According to the embodiments of the present disclosure, through connecting to the grid through the grid-connected AC/DC converter, the power from the apparatus can be fed to the grid when the power source connected to the apparatus is discharging, and the power from the grid can be provided to the apparatus when the power source connected to the apparatus is charging.

According to some embodiments, through the grid-connected AC/DC converter 1200, the apparatus of power conversion 1000 can receive power from the grid 1300, or feed power to the grid 1300. According to some embodiments, the grid-connected AC/DC converter 1200 or the apparatus of power conversion 1000 can control the DC bus 1100, which will be described in details below.

According to some embodiments, the apparatus of power conversion further comprises a second PPC string of one PPC connected in parallel with the DC bus. For the PPC in the second PPC string, a PPC terminal of the PPC is connected to a first bus terminal of the DC bus, a second PPC terminal of the PPC is connected to a first source terminal of a corresponding power source, and a third PPC terminal of the PPC is connected to a second source terminal of the corresponding power source and a second bus terminal of the DC bus. According to the embodiments of the present disclosure, more possible configuration of the apparatus can be provided by the combination of the first PPC string of more than one PPCs connected in series and the second ppc string of one PPC, for example, the power source with high voltage characteristic can be connected to the PPC in the second PPC string, and the power source with relative low voltage characteristic can be connected to the PPC in the first PPC string.

According to some embodiments, at least one of the power sources connected to the PPCs in the apparatus is a battery. The apparatus of power conversion according to the embodiments of the present disclosure can provide more accurate charging control for battery modules or stacks, and the balancing between battery stacks are achieved so that the battery cell lifetime can be further extended.

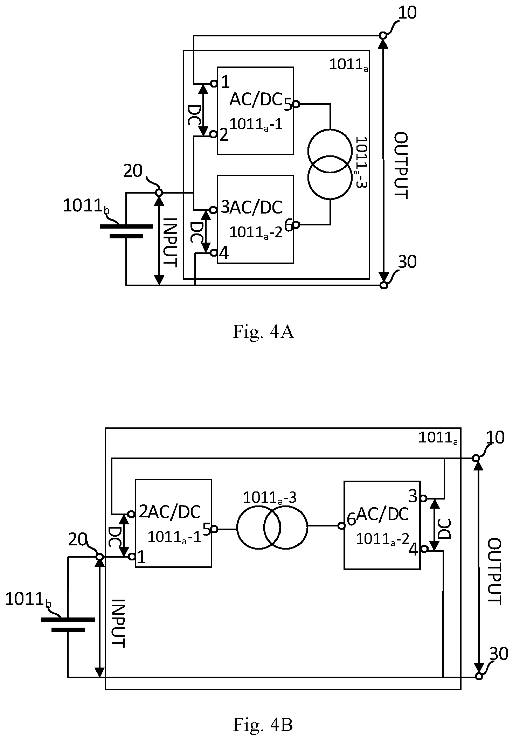

Figs. 4A-4B are schematic diagrams illustrating the connection configuration of the PPC in Fig. 1 according to an embodiment of the present disclosure.

According to some embodiments, as shown in Figs. 4A-4B, the PPC 1011ₐ includes a first AC/DC converter 1011ₐ-1 and a second AC/DC converter 1011ₐ-2. Herein, the term "AC/DC converter" is not intended to limit the conversion directions of AC and DC of the converter. The AC/DC converter may convert DC to AC or convert AC to DC. For example, any of first AC/DC converter 1011ₐ -1 and a second AC/DC converter 1011ₐ -2 may have the following circuit structure: H bridge, IGBT, IGCT, MOSFET, GTO or a single diode, and the like.

According to some embodiments, as shown in Figs. 4A-4B, the first AC/DC converter 1011ₐ -1 and the second AC/DC converter 1011ₐ -2 coupled at AC ports of the first AC/DC converter 1011ₐ -1 and the second AC/DC converter 1011ₐ -2, and the DC port of the second AC/DC converter forms one of the input and the output of the PPC 1011ₐ. A DC port of the first AC/DC converter 1011ₐ-1 and the DC port of the second AC/DC converter 1011ₐ-2 are connected in series to form the other of the input and the output of the PPC 1011ₐ. According to the embodiments of the present disclosure, a part of the power goes directly from the input of the PPC to the output of the PPC by bypassing the first AC/DC converter and the second AC/DC converter and the remaining power is processed by the first AC/DC converter and the second AC/DC converter and then delivered to the output of the PPC, so that a rated power of each of the first AC/DC converter and the second AC/DC converter may be less than a rated power of the respective power source, thereby further reducing the cost of the converter and increasing the power efficiency.

According to some embodiments, the DC port of the second AC/DC converter 1011ₐ-2 are connected in series to form the other of the input and the output of the PPC 1011 means that, for each AC/DC converter, one DC terminal of the DC port is connected to the DC terminal of the DC port of the other AC/DC converter, and the other terminal of the DC port is connected to the terminal of the PPC (i.e., the terminal of the input or output of the PPC).

According to some embodiments, an AC side of the first AC/DC converter 1011ₐ -1 and an AC side of the second AC/DC converter 1011ₐ -2 are electromagnetically coupled or coupled through a capacitor. The "electromagnetically coupled" may refer to being coupled through a transformer 1011ₐ -3 (as shown in Fig. 4A) or inductor.

According to some embodiments, as shown in Fig. 4A, the first AC/DC converter 1011ₐ -1 and the second AC/DC converter 1011ₐ -2 coupled at AC ports of the first AC/DC converter 1011ₐ -1 and the second AC/DC converter 1011ₐ -2, and the DC port of the second AC/DC converter forms the input of the PPC 1011ₐ. A DC port of the first AC/DC converter 1011ₐ -1 and the DC port of the second AC/DC converter 1011ₐ -2 are connected in series to form the output of the PPC 1011ₐ.

According to some embodiments, a DC side of the first AC/DC converter 1011ₐ -1 has a first DC terminal 1 and a second DC terminal 2, and a DC side of the second AC/DC converter 1011ₐ -2 has a third DC terminal 3 and a fourth DC terminal 4, wherein the first DC terminal 1 is connected to the first terminal 10 of the PPC 1011ₐ, the second DC terminal 2 and the third DC terminal 3 are connected to the second terminal 20 of the PPC 1011ₐ, and the fourth DC terminal 4 is connected to the third terminal 30 of the PPC 1011ₐ. In this case, a part of the power goes directly from the power source 1011_{b} to the output of the PPC 1011ₐ by bypassing the first AC/DC converter 1011ₐ -1 and the second AC/DC converter 1011ₐ -2 and the remaining power is processed by the first AC/DC converter 1011ₐ -1 and the second AC/DC converter 1011ₐ -2 and then delivered to the output of the PPC 1011ₐ.

According to some embodiments, as shown in Fig. 4B, the first AC/DC converter 1011ₐ -1 and the second AC/DC converter 1011ₐ -2 coupled at AC ports of the first AC/DC converter 1011ₐ -1 and the second AC/DC converter 1011ₐ -2, and the DC port of the second AC/DC converter forms the output of the PPC 1011ₐ. A DC port of the first AC/DC converter 1011ₐ - 1 and the DC port of the second AC/DC converter 1011ₐ -2 are connected in series to form the input of the PPC 1011ₐ.

According to some embodiments, a DC side of the first AC/DC converter 1011ₐ -1 has a first DC terminal 1 and a second DC terminal 2, and a DC side of the second AC/DC converter 1011ₐ -2 has a third DC terminal 3 and a fourth DC terminal 4, wherein the first DC terminal 1 is connected to the second terminal 20 of the PPC 1011ₐ, the second DC terminal 2 and the third DC terminal 3 are connected to the first terminal 10 of the PPC 1011ₐ, and the fourth DC terminal 4 is connected to the third terminal 30 of the PPC 1011ₐ. In this case, a part of the power goes directly from the power source 1011_{b} to the output of the PPC 1011ₐ by bypassing the first AC/DC converter 1011ₐ -1 and the second AC/DC converter 1011ₐ -2 and the remaining power is processed by the first AC/DC converter 1011ₐ -1 and the second AC/DC converter 1011ₐ -2 and then delivered to the output of the PPC 1011ₐ.

In some embodiments, at least one switching device in each of the first AC/DC converter 1011ₐ -1 and the second AC/DC converter 1011ₐ -2 is a controllable switch. The controllable switch may include IGBT, IGCT, MOSFET, GTO, a triode and the like. In some embodiments, when the AC/DC converter is in the controlled mode, at least one controllable switch in the AC/DC converter may be controlled to switch between the open state and the closed state (e.g., according to the PWM signal). In other embodiments, when the AC/DC converter is in the uncontrolled mode, all controllable switches in the AC/DC converter are held open or held closed, wherein holding the switching device open means that the switching device is always at a turn-off state and holding the switching device closed means that the switching device is always at a turn-on state. It should be understood that the current can still go through the parallel-connected diode in the device when the switching device is at a turn-off state. In this way, the unnecessary switching of the switching device can be avoided, thereby increasing the efficiency of the converter and reducing the power loss due to the continuous switching.

According to some embodiments, a method of operating the above apparatus of power conversion is provided. The method includes: determining a state of the apparatus, wherein the state of the apparatus comprises a power source mode and a voltage source mode; for each first PPC string of the at least one first PPC strings, obtaining a respective control signal for the first PPC string according to the state of the apparatus; for each PPC of the first PPC string, obtaining a respective control signal for the PPC according to the state of the apparatus; and for each PPC of the first PPC string, controlling the PPC based on the respective control signal for the PPC according to the state of the apparatus. According to the embodiments of the present disclosure, more accurate control for each string and each PPC and its corresponding power source can be provided.

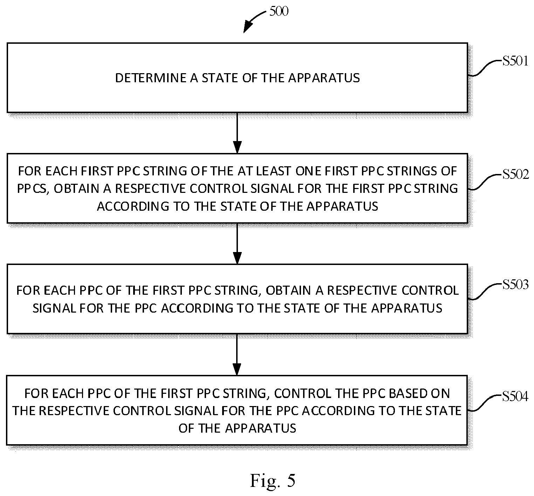

Fig. 5 is a flowchart showing a method 500 for controlling an apparatus for power conversion 1000 in Fig. 1 according to an embodiment of the present disclosure, in which the apparatus for power conversion is substantially the same as described with reference to Figs. 1-4, and thus the details as to the same features are omitted here for conciseness. As shown in Fig. 5, the method 500 includes the steps S501-S504.

In step S501, a state of the apparatus is determined, wherein the state of the apparatus comprises a power source mode and a voltage source mode.

In step S502, for each first PPC string of the at least one first PPC strings, a respective control signal for the first PPC string according to the state of the apparatus is obtained.

In step S503, for each PPC of the first PPC string, a respective control signal for the PPC according to the state of the apparatus is obtained.

In step S504, for each PPC of the first PPC string, the PPC is controlled based on the respective control signal for the PPC according to the state of the apparatus.

The details of steps S501-S504 are described below.

According to some embodiments, when the apparatus of power conversion is in the power source mode, it can be controlled to provide a given amount of power, and the DC bus voltage may be controlled by other apparatus (for example, the grid-connected AC/DC converter in Fig. 3). According to some embodiments, when the apparatus of power conversion is in the voltage source mode, it can be controlled to build the DC bus voltage.

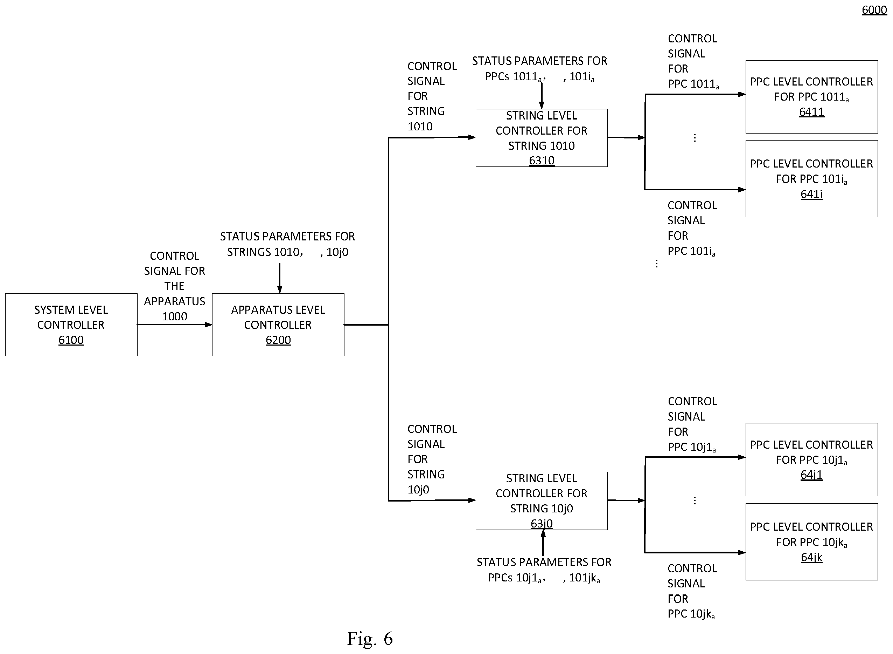

Fig. 6 is a schematic diagram illustrating a controlling loop 6000 of the apparatus of power conversion 1000 in Fig. 1 according to an embodiment of the present disclosure.

As shown in Fig. 6, the controlling loop 6000 includes: a system level controller 6100, an apparatus level controller 6200, string level controllers 6310, ..., 63j0 and PPC level controllers 6411, ... 6411, ..., 64j1, ..., 64jk.

According to some embodiments, the above method 500 can be implemented as the controlling loop 6000, wherein the step S501 can be implemented as the system level controller 6100, the step S502 can be implemented as the apparatus level controller 6200, the step S503 can be implemented as the string level controllers 6310, ..., 63j0, and the step S504 can be implemented as the PPC level controllers 6411, ... 641i, ..., 64j 1, ..., 64jk.

According to some embodiments, the system level controller 6100 generates a control signal for the apparatus of power conversion 1000, for example, when the apparatus of power conversion 1000 is in the power source mode, the control signal for the apparatus of power conversion 1000 is the output power reference, and when the apparatus of power conversion 1000 is in the voltage source mode, the control signal for the apparatus of power conversion 1000 is DC bus voltage reference. According to some embodiments, the system level controller 6100 also generates a control signal for the grid-connected AC/DC converter, for example, when the apparatus of power conversion 1000 is in the power source mode, the system level controller 6100 generates a DC bus voltage reference for the grid-connected AC/DC converter.

According to some embodiments, the apparatus level controller 6200 generates a respective control signal for each of the strings 1010, ..., 10j0 in the apparatus 1000. According to some embodiments, the apparatus level controller 6200 receives status parameters for strings 1010, ..., 10j0 in the apparatus and generates respective control signals for the strings 1010, ..., 10j0 in the apparatus based on the status parameters for strings 1010, ..., 10j0 in the apparatus, thereby providing more accurate control for each string based on its individual status.

According to some embodiments, for each of string level controllers 6310, ..., 63j0, the string level controller generates a respective control signal for each of the PPCs in the string. According to some embodiments, for each of string level controllers 6310, ..., 63j0, the string level controller receives status parameters for PPCs in the string and generates respective control signals for the PPCs in the string based on the status parameters for PPCs in the string, thereby providing more accurate control for each PPC based on its individual status.

According to some embodiments, the obtaining a respective control signal for the first PPC string according to the state of the apparatus comprises: in response to the state of the apparatus being the power source mode, generating the respective control signal for the first PPC string based on a power reference for the apparatus, an output power of the apparatus and a respective status parameter of each of the at least one first PPC string, wherein the control signal for the first PPC string includes a current reference for the first PPC string, and the obtaining a respective control signal for the PPC according to the state of the apparatus comprises: in response to the state of the apparatus being the power source mode, generating the respective control signal for the PPC based on the respective current reference for the first PPC string, the current of the first PPC string and a respective status parameter of each of PPCs in the first PPC string, wherein the control signal for the PPC includes at least one of the input voltage reference, the input current reference and the input power reference for the PPC and the controlling the PPC based on the respective control signal for the PPC according to the state of the apparatus comprises: in response to the state of the apparatus being the power source mode, controlling the PPC at least partly based on the respective control signal for the PPC and the feedback parameter corresponding to the respective control signal for the PPC. According to the embodiments of the present disclosure, when the apparatus is in the power source mode, the respective control signal for each first PPC string in the apparatus is generated based on the respective status parameter of the string, thereby the first PPC string can be controlled based on the respective status parameter of the string, which provides differentiated control for the PPC string; and the respective control signal for each PPC is generated based on the respective status parameter of the PPC, thereby the PPC can be controlled based on the respective status parameter of the PPC, which provides differentiated control for the PPC.

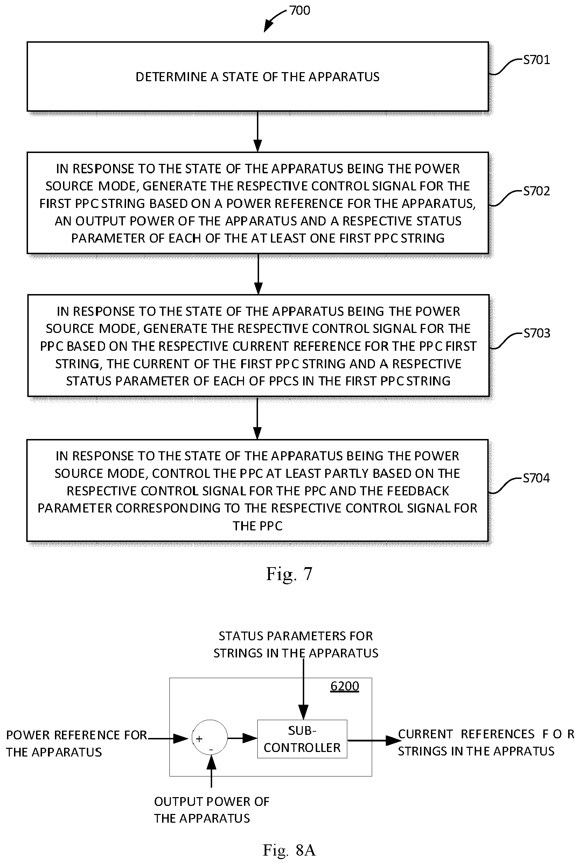

Fig. 7 is a flowchart illustrating a method 700 for operating the apparatus of power conversion 1000 in Fig. 1 according to an embodiment of the present disclosure, in which the apparatus for power conversion is substantially the same as described with reference to Figs. 1-4, and thus the details as to the same features are omitted here for conciseness. As shown in Fig. 7, the method 700 includes the steps S701-S704.

In step S701, the state of the apparatus is determined, wherein the state of the apparatus is power source mode.

In step S702, in response to the state of the apparatus being the power source mode, the respective control signal for the first PPC string is generated based on a power reference for the apparatus, an output power of the apparatus and a respective status parameter of each of the at least one first PPC string, wherein the control signal for the first PPC string includes a current reference for the first PPC string.

According to some embodiments, the step S702 can be implemented as the apparatus level controller 6200 in Fig. 8A, wherein the apparatus level controller 6200 in Fig. 8A corresponds to the apparatus level controller 6200 in Fig. 6. According to some embodiments, as shown in Fig. 8A, the difference between the power reference for the apparatus and the output power of the apparatus is calculated at first, and then the sub-controller (for example, a PI controller) generates current references for strings in the apparatus based on the difference between the power reference for the apparatus and the output power of the apparatus and the status parameters for strings in the apparatus.

In step S703, in response to the state of the apparatus being the power source mode, the respective control signal for the PPC is generated based on the respective current reference for the first PPC string, the current of the first PPC string and a respective status parameter of each of PPCs in the first PPC string, wherein the control signal for the PPC includes at least one of the input voltage reference, the input current reference and the input power reference for the PPC.

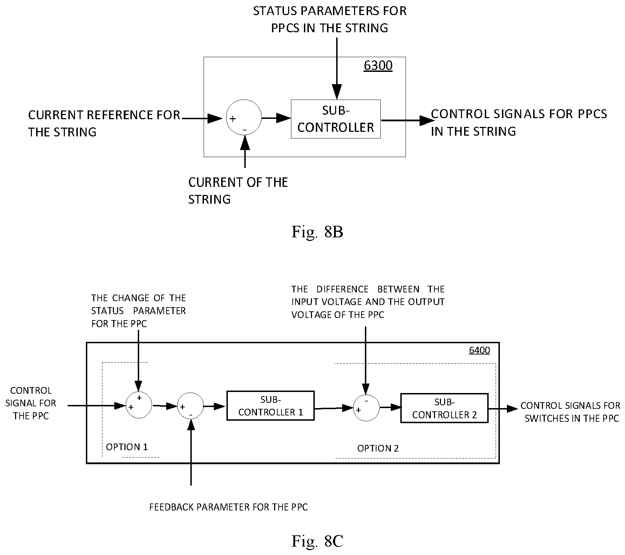

According to some embodiments, the step S703 can be implemented as the string level controller 6300 in Fig. 8B, wherein the string level controller 6300 in Fig. 8B corresponds to the string level controllers 6310, ..., 63j0 in Fig. 6. According to some embodiments, as shown in Fig. 8B, the difference between the current reference for the string and the output power of the string is calculated at first, and then the sub-controller generates control signals for PPCs in the string based on the difference between the current reference for the string and the output power of the string and the status parameters for PPCs in the string.

According to some embodiments, the type of the control signal for the PPC (i.e., the input voltage reference, the input current reference and the input power reference for the PPC) is determined based on the mode of the power source connected to the PPC. For example, when the power source is in the constant power mode, the control signal for the PPC is the input power reference.

In step S704, in response to the state of the apparatus being the power source mode, the PPC is controlled at least partly based on the respective control signal for the PPC and the feedback parameter corresponding to the respective control signal for the PPC.

According to some embodiments, the controlling the PPC at least partly based on the respective control signal for the PPC and the feedback parameter corresponding to the respective control signal for the PPC comprises: controlling the PPC based on the respective control signal for the PPC, the feedback parameter corresponding to the respective control signal for the PPC and at least one of the following: the change of the status parameter for the PPC; and the difference between the input voltage and the output voltage of the PPC. According to the embodiments of the present disclosure, the change of the status parameter for the PPC (such as, the change of the State of Health (SOH) of battery cells connected to the PPC) can be used to optimize the control of the PPC on the power source based on the status of the PPC (such as the SOH status of its corresponding battery cells), for example, the change of the status parameter for the PPC is provided as an offset on the respective control signal for the PPC. According to the embodiments of the present disclosure, the difference between the input voltage and the output voltage of the PPC can be used to improve the performance of the control of the PPC, for example, an inner control loop based on the difference between the input voltage and the output voltage of the PPC can be added.

According to some embodiments, the feedback parameter corresponds to the respective control signal for the PPC, for example, when the control signal for the PPC is the power reference for the PPC, the feedback parameter is the output power of the PPC.

According to some embodiments, the step S704 can be implemented as the PPC level controller 6400 in Fig. 8C, wherein the PPC level controller 6400 in Fig. 8C corresponds to the PPC level controllers 6411, ... 641i, ..., 64j1, ..., 64jk in Fig. 6. According to some embodiments, as shown in Fig. 8C, the first difference between the control signal for the PPC and the change of the status parameter for the PPC is calculated at first, then the second difference between the first difference and the feedback parameter for the PPC is calculated, then the sub-controller 1 generates an internal control signal for the PPC based on the second difference, then the third difference between the internal control signal for the PPC and the difference between the input voltage and the output voltage of the PPC is calculated, and finally the sub-controller 2 generates control signals for switches in the PPC (for example, PWM signals) based on the third difference.

According to some embodiments, the option 1 of the change of the status parameter for the PPC and the option 2 of the difference between the input voltage and the output voltage of the PPC shown in Fig. 8C can be omitted, i.e., there may be only one of the options 1-2 in the controller 6400, or there may none of the options 1-2 in the controller 6400. According to some embodiments, when the option 1 of the change of the status parameter for the PPC is omitted, the difference between the control signal for the PPC and the feedback parameter for the PPC is calculated, which is then input into the sub-controller. According to some embodiments, when the option 2 of the difference between the input voltage and the output voltage of the PPC is omitted, the output of the sub-controller 1 is directly output as the control signals for the switches in the PPC.

According to some embodiments, the obtaining a respective control signal for the first PPC string according to the state of the apparatus comprises: in response to the state of the apparatus being the voltage source mode, generating the respective control signal for the first PPC string based on a voltage reference for the apparatus, an output voltage of the apparatus and a respective status parameter of each of the at least one first PPC string, wherein the control signal for the first PPC string includes at least one droop characteristic parameter for the first PPC string, and wherein the obtaining a respective control signal for the PPC according to the state of the apparatus comprises: in response to the state of the apparatus being the voltage source mode, determining a voltage reference for the first PPC string based on the at least one droop characteristic parameter for the first PPC string and a current of the string; and generating respective output voltage references for PPCs of the first PPC string based on the voltage reference for the first PPC string and a respective status parameter of each of PPCs in the first PPC string, and wherein the controlling the PPC based on the respective control signal for the PPC according to the state of the apparatus comprises: in response to the state of the apparatus being the voltage source mode, controlling the PPC at least partly based on the output voltage reference for the PPC, the output voltage of the PPC and the status parameter of the PPC. According to the embodiments of the present disclosure, similar to the power source mode, when the apparatus is in the voltage source mode, the respective control signal for each first PPC string in the apparatus is generated based on the respective status parameter of the string, thereby the first PPC string can be controlled based on the respective status parameter of the string, which provides differentiated control for the PPC string; and the respective control signal for each PPC is generated based on the respective status parameter of the PPC, thereby the PPC can be controlled based on the respective status parameter of the PPC, which provides differentiated control for the PPC.

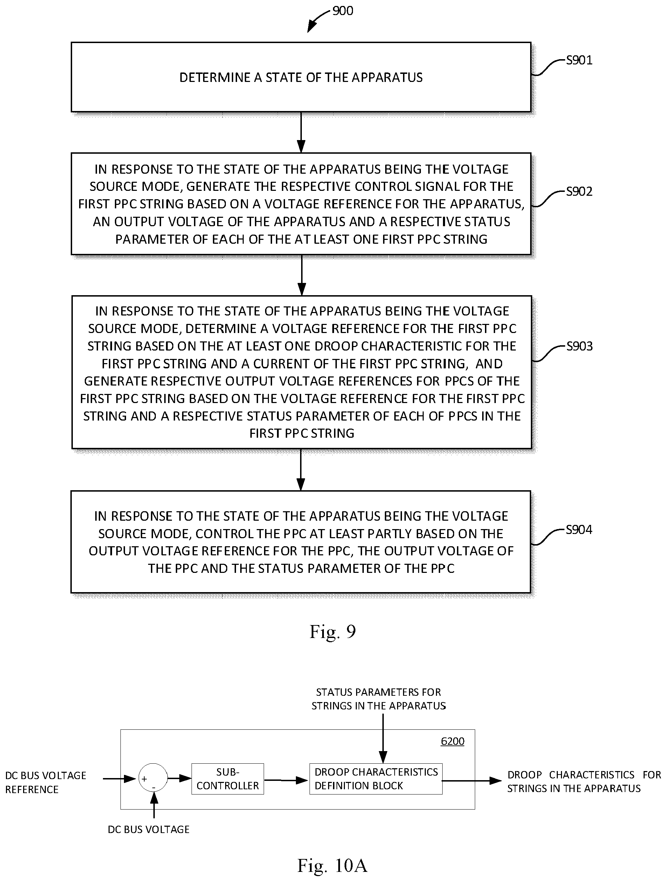

Fig. 9 is a flowchart illustrating a method 900 for operating the apparatus of power conversion 1000 in Fig. 1 according to an embodiment of the present disclosure, in which the apparatus for power conversion is substantially the same as described with reference to Figs. 1-4, and thus the details as to the same features are omitted here for conciseness. As shown in Fig. 9, the method 900 includes the steps S901-S904.

In step S901, the state of the apparatus is determined, wherein the state of the apparatus is voltage source mode.

In step S902, in response to the state of the apparatus being the voltage source mode, the respective control signal for the first PPC string is generated based on a voltage reference for the apparatus, an output voltage of the apparatus and a respective status parameter of each of the at least one first PPC string, wherein the control signal for the first PPC string includes at least one droop characteristic parameter for the first PPC string.

According to some embodiments, the step S902 can be implemented as the apparatus level controller 6200 in Fig. 10A, wherein the apparatus level controller 6200 in Fig. 10A corresponds to the apparatus level controller 6200 in Fig. 6. According to some embodiments, as shown in Fig. 10A, the difference between the DC bus voltage reference and the DC bus voltage is calculated at first, then the sub-controller generates an internal control signal for the apparatus based on the difference between the DC bus voltage reference and the DC bus voltage, and then the droop characteristic definition block generates droop characteristic parameters for strings in the apparatus based on the internal control signal for the apparatus and the status parameters for strings in the apparatus.

According to some embodiments, the droop characteristic parameter for each string includes at least one of the rate and the nodal increment of the droop characteristic.

In step S903, in response to the state of the apparatus being the voltage source mode, a voltage reference for the first PPC string is determined based on the at least one droop characteristic for the first PPC string and a current of the string, and respective output voltage references for PPCs of the first PPC string are generated based on the voltage reference for the first PPC string and a respective status parameter of each of PPCs in the first PPC string.

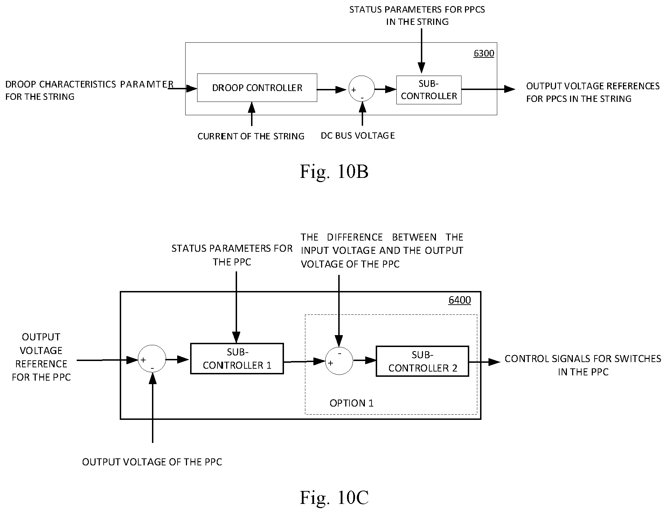

According to some embodiments, the step S903 can be implemented as the string level controller 6300 in Fig. 10B, wherein the string level controller 6300 in Fig. 10B corresponds to the string level controllers 6310, ..., 63j0 in Fig. 6. According to some embodiments, as shown in Fig. 10B, the droop characteristics of the droop controller is determined based on the droop characteristic parameter of the string, and the droop controller determines the voltage reference for the string based on the droop characteristic parameter of the string and the current of the string, and then the difference between the voltage reference for the string and the DC bus voltage is calculate, and then the sub-controller generates the output voltage references for PPCs in the string based on the difference between the voltage reference for the string and the DC bus voltage and the status parameters for PPCs in the string.

In step S904, in response to the state of the apparatus being the voltage source mode, the PPC is controlled at least partly based on the output voltage reference for the PPC, the output voltage of the PPC and the status parameter of the PPC.

According to some embodiments, the controlling the PPC at least partly based on the output voltage reference for the PPC, the output voltage of the PPC and the status parameter of the PPC comprises: controlling the PPC at least based on the output voltage reference for the PPC, the output voltage of the PPC and the difference between the input voltage and the output voltage of the PPC. According to the embodiments of the present disclosure, the difference between the input voltage and the output voltage of the PPC can be used to improve the performance of the control of the PPC, for example, an inner control loop based on the difference between the input voltage and the output voltage of the PPC can be added.

According to some embodiments, the step S904 can be implemented as the PPC level controller 6400 in Fig. 10C, wherein the PPC level controller 6400 in Fig. 10C corresponds to the PPC level controllers 6411, ... 641i, ..., 64j1, ..., 64jk in Fig. 6. According to some embodiments, as shown in Fig. 10C, the first difference between the output voltage reference for the PPC and the output voltage of the PPC is calculated, then the sub-controller 1 generates a internal control signal for the PPC based on the first difference and the status parameter for the PPC, then the second difference between the internal control signal for the PPC and the difference between the input voltage and the output voltage of the PPC is calculated, and finally the sub-controller 2 generates control signals for switches in the PPC (for example, PWM signals) based on the second difference.

According to some embodiments, the option 1 of the difference between the input voltage and the output voltage of the PPC shown in Fig. 10C can be omitted. According to some embodiments, when the option 1 of the difference between the input voltage and the output voltage of the PPC is omitted, the output of the sub-controller 1 is directly output as the control signals for the switches in the PPC.

In the PPC, the smaller ratio of the output voltage and the input voltage k_{PPC} relates to a smaller rated power, which decreases the cost of the PPC. When the voltage of the power source (i.e., the input voltage of the PPC) fluctuates in a certain range, the PPC with a ratio k_{PPC} in a wide range should be designed to provide a constant DC bus voltage control, which increases the power capacity and the cost of PPC. To solve this problem, a floating DC bus voltage control is provided.

According to some embodiments, when the apparatus is in the power source mode, the grid-connected AC/DC converter controls the DC bus voltage. According to some embodiments, the at least one first PPC string is further connected to a grid-connected AC/DC converter, wherein the input of the grid-connected AC/DC converter is connected to the DC bus, and the output of the grid-connected AC/DC converter is connected to the gird, and wherein the grid-connected AC/DC converter controls the voltage of the DC bus based on a DC bus voltage and at least one of the following: power efficiency of the PPCs in the apparatus; power efficiency of the grid-connected AC/DC converter; temperature of the battery; and temperature of the cabinets of the PPCs in the apparatus. According to the embodiments of the disclosure, when the apparatus is in the power source mode, the grid-connected AC/DC converter controls the DC bus voltage based on the current parameters of the apparatus and/or the grid-connected AC/DC converter, thereby providing a floating DC bus voltage control, instead of controlling the DC bus voltage at a fixed value. Therefore, based on the floating DC bus voltage control provided by the embodiments of the present disclosure, the ratio k_{PPC} can be limited in a small range, and the PPC can be designed with smaller rated power capacity, and the total cost can be decreased and efficiency of the PPC can be increased.

According to some embodiments, when the apparatus is in the voltage source mode, the apparatus controls the DC bus voltage. According to some embodiments, in response to the state of the apparatus being the voltage source mode, the voltage reference for the apparatus is generated based on a DC bus voltage and at least one of the following parameters: power efficiency of the PPCs in the apparatus; power efficiency of the grid-connected AC/DC converter; temperature of the battery; and temperature of the cabinets of the PPCs in the apparatus. According to the embodiments of the disclosure, when the apparatus is in the voltage source mode, the voltage reference of the is a floating value determined based on the current parameters of the apparatus and/or the grid-connected AC/DC converter, instead of being a fixed value. Therefore, based on the floating DC bus voltage control provided by the embodiments of the present disclosure, the ratio k_{PPC} can be limited in a small range, and the PPC can be designed with smaller rated power capacity, and the total cost can be decreased and efficiency of the PPC can be increased.

According to the embodiments of the disclosure, based on the floating DC bus voltage control, the ratio k_{PPC} can be limited in a small range, and the PPC can be designed with smaller rated power capacity, and the total cost can be decreased and efficiency of the PPC can be increased.

According to some embodiments, the PPC in the apparatus includes a first AC/DC converter and a second AC/DC converter coupled at AC ports of the first AC/DC converter and the second AC/DC converter, and wherein a DC port of the second AC/DC converter forms one of the input and the output of the PPC, and the DC port of the first AC/DC converter and a DC port of the second AC/DC converter are connected in series to form the other of the input and the output of the PPC, and the controlling the PPC based on the respective control signal for the PPC according to the state of the apparatus comprises: in response to that the DC port of the second AC/DC converter forms the input of the PPC, and the DC port of the first AC/DC converter and the DC port of the second AC/DC converter are connected in series to form the output of the PPC, controlling the first AC/DC converter of the PPC based on the respective control signal for the PPC, and setting the second AC/DC converter in an uncontrolled mode when the PPC is in the charging mode, and controlling the second AC/DC converter of the PPC based on the respective control signal for the PPC, and setting the first AC/DC converter in the uncontrolled mode when the PPC is in the discharging mode; and in response to that the DC port of the second AC/DC converter forms the output of the PPC, and the DC port of the first AC/DC converter and the DC port of the second AC/DC converter are connected in series to form the input of the PPC, controlling the first AC/DC converter of the PPC based on the respective control signal for the PPC, and setting the second AC/DC converter in an uncontrolled mode when the PPC is in the discharging mode, and controlling the second AC/DC converter of the PPC based on the respective control signal for the PPC, and setting the first AC/DC converter in the uncontrolled mode when the PPC is in the charging mode, wherein, in the uncontrolled mode, all controllable switches in the first AC/DC converter or the second AC/DC converter are held open or held closed.

According to the embodiments of the disclosure, by setting one corresponding the AC/DC converters in the PPC in the uncontrolled mode, in which all controllable switches in the AC/DC converter are held open or held closed to avoid the unnecessary switching loss, the efficiency of the apparatus can be improved and the PPC level controller for generating the control signals for the switches in the PPC can be simplified.

According to the embodiments of the present disclosure, a system for power conversion is provided, which includes: the above apparatus of power conversion (e.g., the apparatus 1000 in Fig. 1); a DC bus (e.g., the DC bus 1200 in Fig. 1); and a plurality of power sources connected to the apparatus (e.g., the power sources 1011_{b}, ..., 101i_{b},..., 10j1_{b},...,10jk_{b}).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes functions or operations, or may be implemented by a combination of dedicated hardware and computer instructions.

The foregoing descriptions are merely preferred embodiments of the present disclosure and explanations of the applied technical principles. Those skilled in the art should understand that the scope of the present disclosure involved in the embodiments of the present disclosure is not limited to the technical solutions formed by specific combinations of the foregoing technical features, and shall also cover other technical solutions formed by any combination of the foregoing technical features or equivalent features thereof without departing from the foregoing inventive concept. For example, a technical solution formed by a replacement of the foregoing features with technical features with similar functions in the technical features disclosed in the embodiments of the present disclosure (but not limited thereto) also falls within the scope of the present disclosure.

## Claims

1. An apparatus for power conversion comprising:
at least one first partial power converter (PPC) string connected in parallel with a DC bus, wherein each first PPC string comprises more than one PPCs connected in series,
wherein, in each first PPC string, an output of each PPC of the more than one PPCs is connected in series, and an input of each PPC of the more than one PPCs is connected to a corresponding power source,
wherein, in each PPC, the input of the PPC and the output of the PPC have one common terminal.

2. The apparatus according to claim 1, wherein the more than one PPCs include at least a first PPC and a second PPC,
wherein a first PPC terminal of the first PPC is connected to a first bus terminal of the DC bus, a second PPC terminal of the first PPC is connected to a first source terminal of a first power source, and a third PPC terminal of the first PPC is connected to a second source terminal of the first power source and a first PPC terminal of an adjacent PPC closer to a second bus terminal of the DC bus than the first PPC, and
a first PPC terminal of the second PPC is connected to a third PPC terminal of an adjacent PPC closer to the first bus terminal than second the PPC, a second PPC terminal of the second PPC is connected to a first source terminal of a second power source, and a third PPC terminal of the second PPC is connected to a second source terminal of the second power source and a second bus terminal, and
wherein, in each PPC of the more than one PPCs, the input of the PPC is formed between the second PPC terminal of the PPC and the third PPC terminal of the PPC, and the output of the PPC is formed between the first PPC terminal of the PPC and the third PPC terminal of the PPC.

3. The apparatus according to claim 1 or 2, wherein the at least one first PPC string is further connected to a grid-connected AC/DC converter,
wherein an input of the grid-connected AC/DC converter is connected to the DC bus, and an output of the grid-connected AC/DC converter is connected to the gird.

4. The apparatus according to claim 1 or 2, further comprising:
a second PPC string of one PPC connected in parallel with the DC bus.

5. The apparatus according to claim 1 or 2, wherein at least one of the power sources connected to the PPCs in the apparatus is a battery.

6. The apparatus according to claim 1 or 2, wherein the PPC in the apparatus includes a first AC/DC converter and a second AC/DC converter coupled at AC ports of the first AC/DC converter and the second AC/DC converter, and
wherein a DC port of the second AC/DC converter forms one of the input and the output of the PPC, and a DC port of the first AC/DC converter and the DC port of the second AC/DC converter are connected in series to form the other of the input and the output of the PPC.

7. A method of operating the apparatus of power conversion according to claim 1, comprising:
determining a state of the apparatus, wherein the state of the apparatus comprises a power source mode and a voltage source mode;
for each first PPC string of the at least one first PPC strings, obtaining a respective control signal for the first PPC string according to the state of the apparatus;
for each PPC of the first PPC string, obtaining a respective control signal for the PPC according to the state of the apparatus; and
for each PPC of the first PPC string, controlling the PPC based on the respective control signal for the PPC according to the state of the apparatus.

8. The method according to claim 7, wherein the obtaining a respective control signal for the first PPC string according to the state of the apparatus comprises:
in response to the state of the apparatus being the power source mode, generating the respective control signal for the first PPC string based on a power reference for the apparatus, an output power of the apparatus and a respective status parameter of each of the at least one first PPC string, wherein the control signal for the first PPC string includes a current reference for the first PPC string, and
wherein the obtaining a respective control signal for the PPC according to the state of the apparatus comprises:
in response to the state of the apparatus being the power source mode, generating the respective control signal for the PPC based on the respective current reference for the first PPC string, the current of the first PPC string and a respective status parameter of each of PPCs in the first PPC string, wherein the control signal for the PPC includes at least one of the input voltage reference, the input current reference and the input power reference for the PPC and
wherein the controlling the PPC based on the respective control signal for the PPC according to the state of the apparatus comprises:
in response to the state of the apparatus being the power source mode, controlling the PPC at least partly based on the respective control signal for the PPC and the feedback parameter corresponding to the respective control signal for the PPC.

9. The method according to claim 8, wherein the controlling the PPC at least partly based on the respective control signal for the PPC and the feedback parameter corresponding to the respective control signal for the PPC comprises:
controlling the PPC based on the respective control signal for the PPC, the feedback parameter corresponding to the respective control signal for the PPC and at least one of the following:
the change of the status parameter for the PPC; and
the difference between the input voltage and the output voltage of the PPC.

10. The method according any of claims 7-9, wherein the at least one first PPC string of PPCs is further connected to a grid-connected AC/DC converter, wherein the input of the grid-connected AC/DC converter is connected to the DC bus, and the output of the grid-connected AC/DC converter is connected to the gird, and
wherein the grid-connected AC/DC converter controls the voltage of the DC bus based on a DC bus voltage and at least one of the following:
power efficiency of the PPCs in the apparatus;
power efficiency of the grid-connected AC/DC converter;
temperature of the battery; and
temperature of the cabinets of the PPCs in the apparatus.

11. The method according to claim 7, wherein the obtaining a respective control signal for the first PPC string according to the state of the apparatus comprises:
in response to the state of the apparatus being the voltage source mode, generating the respective control signal for the first PPC string based on a voltage reference for the apparatus, an output voltage of the apparatus and a respective status parameter of each of the at least one first PPC string, wherein the control signal for the first PPC string includes at least one droop characteristic parameter for the first PPC string, and
wherein the obtaining a respective control signal for the PPC according to the state of the apparatus comprises:
in response to the state of the apparatus being the voltage source mode, determining a voltage reference for the first PPC string based on the at least one droop characteristic parameter for the first PPC string and a current of the string; and
generating respective output voltage references for PPCs of the first PPC string based on the voltage reference for the first PPC string and a respective status parameter of each of PPCs in the first PPC string, and
wherein the controlling the PPC based on the respective control signal for the PPC according to the state of the apparatus comprises:
in response to the state of the apparatus being the voltage source mode, controlling the PPC at least partly based on the output voltage reference for the PPC, the output voltage of the PPC and the status parameter of the PPC.

12. The method according to claim 11, wherein the controlling the PPC at least partly based on the output voltage reference for the PPC, the output voltage of the PPC and the status parameter of the PPC comprises:
controlling the PPC at least based on the output voltage reference for the PPC, the output voltage of the PPC and the difference between the input voltage and the output voltage of the PPC.

13. The method according to any of claims 11-12, wherein the at least one first PPC string is further connected to a grid-connected AC/DC converter, wherein the input of the grid-connected AC/DC converter is connected to the DC bus, and the output of the grid-connected AC/DC converter is connected to the gird, and
the method further comprises:
in response to the state of the apparatus being the voltage source mode, generating the voltage reference for the apparatus based on a DC bus voltage and at least one of the following parameters:
power efficiency of the PPCs in the apparatus;
power efficiency of the grid-connected AC/DC converter;
temperature of the battery; and
temperature of the cabinets of the PPCs in the apparatus.

14. The method according to claim 7, wherein the PPC in the apparatus includes a first AC/DC converter and a second AC/DC converter coupled at AC ports of the first AC/DC converter and the second AC/DC converter, and
wherein a DC port of the second AC/DC converter forms one of the input and the output of the PPC, and the DC port of the first AC/DC converter and a DC port of the second AC/DC converter are connected in series to form the other of the input and the output of the PPC, and the controlling the PPC based on the respective control signal for the PPC according to the state of the apparatus comprises:
in response to that the DC port of the second AC/DC converter forms the input of the PPC, and the DC port of the first AC/DC converter and the DC port of the second AC/DC converter are connected in series to form the output of the PPC, controlling the first AC/DC converter of the PPC based on the respective control signal for the PPC, and setting the second AC/DC converter in an uncontrolled mode when the PPC is in the charging mode, and controlling the second AC/DC converter of the PPC based on the respective control signal for the PPC, and setting the first AC/DC converter in the uncontrolled mode when the PPC is in the discharging mode; and
in response to that the DC port of the second AC/DC converter forms the output of the PPC, and the DC port of the first AC/DC converter and the DC port of the second AC/DC converter are connected in series to form the input of the PPC, controlling the first AC/DC converter of the PPC based on the respective control signal for the PPC, and setting the second AC/DC converter in an uncontrolled mode when the PPC is in the discharging mode, and controlling the second AC/DC converter of the PPC based on the respective control signal for the PPC, and setting the first AC/DC converter in the uncontrolled mode when the PPC is in the charging mode,
wherein, in the uncontrolled mode, all controllable switches in the first AC/DC converter or the second AC/DC converter are held open or held closed.

15. A system for power conversion comprising:
the apparatus according to any of claims 1-6;
a DC bus; and
a plurality of power sources connected to the apparatus.
